# EUROPÄISCHE PATENTSCHRIFT

(11) **EP 1 682 387 B1**
(45) Veröffentlichungstag und Bekanntmachung des Hinweises auf die Patenterteilung: **27.02.2008**
(21) Anmeldenummer: 04762469.7
(22) Anmeldetag: 22.07.2004
(51) Int. Cl.: B60R 21/017, B60R 21/0132

(54) **STEUERGERÄT UND BESCHLEUNIGUNGSSENSORIK**
CONTROL DEVICE AND ACCELERATION SENSING MECHANISM
APPAREIL DE COMMANDE ET CAPTEUR D'ACCELERATION

(30) Priorität: 31.10.2003 DE 10350919
(43) Veröffentlichungstag der Anmeldung: 26.07.2006
(73) Patentinhaber: ROBERT BOSCH GMBH, 70442 Stuttgart (DE)
(72) Erfinder: WELLHOEFER, Matthias, 71701 Schwieberdingen (DE); FRESE, Volker, 71701 Schwieberdingen (DE)
(86) Internationale Anmeldenummer: PCT/DE2004/001619
(87) Internationale Veröffentlichungsnummer: WO 2005/044638

(56) Entgegenhaltungen:
- WO-A-01/94158
- WO-A-02/04257
- DE-A- 10 057 916
- US-B1- 6 178 820
- US-B1- 6 220 628

## Beschreibung

### Stand der Technik

Die Erfindung geht aus von einem Steuergerät bzw. einer Beschleunigungssensorik nach der Gattung der unabhängigen Patentansprüche.

Aus DE 100 57 916 C2, als nächstliegender Stand der Technik betrachtet, ist ein Steuergerät zur Ansteuerung von Personenschutzmitteln mit einem elektronischen Sicherheitsschalter bekannt, wobei der Sicherheitsschalter unabhängig von einem Prozessor Endstufen in Abhängigkeit von einem Signal einer Beschleunigungssensorik freigibt. Der Prozessor bestimmt in Abhängigkeit von diesem Signal, ob die Endstufen angesteuert werden und damit die Personenschutzmittel. Damit ist eine hardwareunabhängige Plausibilisierung und Redundanz gegeben.

US 6,178,820 B1 offenbart einen Beschleunigungssensor, der auch einen Schalldruck messen kann. Ein Geschwindigkeitssignal von der gemessenen Beschleunigung wird durch Integration erreicht. Diese Integration kann in der Elektronik des Sensors integriert sein.

### Vorteile der Erfindung

Das erfindungsgemäße Steuergerät bzw. die erfindungsgemäße Beschleunigungssensorik mit den Merkmalen der unabhängigen Patentansprüche haben demgegenüber den Vorteil, dass der Sicherheitsschalter nunmehr bereits das integrierte Beschleunigungssignal auswertet, da die Beschleunigungssensorik selbst das Beschleunigungssignal integriert. Dazu ist in der Beschleunigungssensorik vorteilhafter Weise ein Integrator vorhanden, der entweder einen oder mehrere Beschleunigungssignale, die die Beschleunigungssensorik erzeugt, integriert. Dies hat den Vorteil, dass beim Prozessor, also dem Mikrocontroller im Steuergerät, der Integrator entfallen kann und so dieser einfacher ausgeführt wird. Außerdem kann der Sicherheitsschalter bereits das integrierte Beschleunigungssignal auswerten, womit eine bessere Auswertung gegenüber dem einen Beschleunigungssignal möglich wird. Auch wird vermieden, dass beim Sicherheitsschalter selbst ein Integrator vorhanden ist, oder ein Filter, um eine Glättung des Beschleunigungssignals zu erzielen. Vor allem wird dadurch erreicht, dass die Plausibilität für einen möglichen Crash genauer festgestellt werden kann. Wird nämlich das eine Beschleunigungssignal vom Sicherheitsschalter untersucht, müssen Schwellwerte, mit denen der Sicherheitsschalter das Signal vergleicht, möglichst hoch angesetzt werden, so dass kurzzeitige Beschleunigungsspitzen nicht zu einer Freigabe der Endstufen im Steuergerät führen. Beim integrierten Beschleunigungssignal hingegen ist es möglich, die Schwellwerte entsprechend niedriger zu setzen, um damit eine genauere Plausibilisierung zu erreichen, so dass auch bei Auslösefällen, die nicht so ein hohes Beschleunigungssignal mit sich bringen, es dennoch zu einer Freigabe der Endstufen kommt.

Durch die in den abhängigen Ansprüchen aufgeführten Maßnahmen und Weiterbildungen sind vorteilhafte Verbesserungen der in den unabhängigen Patentansprüchen angegebenen Steuergeräte und Beschleunigungssensorik möglich.

Besonders vorteilhaft ist, dass die Beschleunigungssensorik selbst einen Integrator aufweist und so in einem Gehäuse diese Vorverarbeitung mituntergebracht ist. Zusätzlich kann auch eine Hochpaßfilterung vorgesehen sein, die entweder analog oder digital implementiert ist. Die Hochpaßfilterung ist vorteilhafter Weise vorhanden, um eine mögliche Offsetdrift des Beschleunigungssensors zu kompensieren. Dazu kann beispielsweise ein Hochpaßfilter erster Ordnung mit 1 bis 2 Hz nachgeschaltet sein. Insbesondere bei einer Schotterfahrt kann dies von Nutzen sein.

### Zeichnung

Ausführungsbeispiele der Erfindung sind in der Zeichnung dargestellt und werden in der nachfolgenden Beschreibung näher erläutert.

Es zeigen
- Figur 1: ein Blockschaltbild des erfindungsgemäßen Steuergeräts,
- Figur 2: ein erstes Blockschaltbild der Beschleunigungssensorik,
- Figur 3: ein zweites Blockschaltbild der Beschleunigungssensorik,
- Figur 4: ein Signal-Zeit-Diagramm und
- Figur 5: ein weiteres Signal-Zeit-Diagramm.

### Beschreibung

Die redundante Auswertung von Sensorsignalen in Airbagsteuergeräten wurde seit jeher betrieben, um eine hohe Sicherheit bei der Ansteuerung von Personenschutzmitteln wie Airbags, Gurtstraffern oder Überrollbügeln zu erreichen. Früher wurden vornehmlich mechanische Schalter eingesetzt, die beispielsweise im Strompfad zu den Endstufen angeordnet waren und bei einer entsprechend hohen Beschleunigung diesen Strompfad durchgeschaltet haben. Zunehmend werden jedoch auch elektronische Sicherheitsschalter verwendet. Diese elektronischen Sicherheitsschalter weisen elektronische Strukturen auf, die die Auswertung von Sensorsignalen ermöglichen. Diese elektronischen Strukturen sind daher einem Schaltwerk oder Rechenwerk sehr ähnlich.

Erfindungsgemäß wird nun vorgeschlagen, dass die Beschleunigungssensoren bereits integrierte Beschleunigungssignale ausgeben und der Sicherheitsschalter dann parallel zum Prozessor diese integrierten Beschleunigungssignale auswertet. Damit wird dem Prozessor oder Mikrocontroller die aufwändige Funktion der Integration der Beschleunigungssignale erspart, so dass dieser einfacher gestaltet werden kann und der Sicherheitsschalter kann auf Grund der integrierten Beschleunigungssignale genauer die Sensorsignale auswerten, ob ein Crashfall vorliegt, oder nicht.

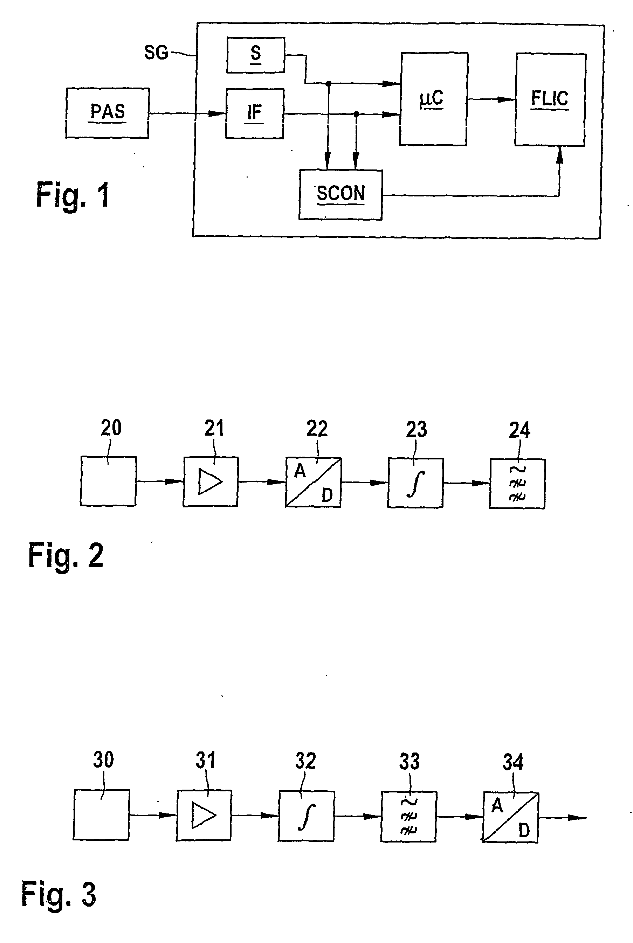

Figur 1 zeigt in einem Blockschaltbild das erfindungsgemäße Steuergerät. Im Gehäuse des Steuergeräts SG befindet sich ein Beschleunigungssensor S, der zumindest in Fahrzeuglängsrichtung die Beschleunigungen erfassen kann. Es ist möglich, dass der Beschleunigungssensor S auch in Fahrzeugquerrichtung Beschleunigungen erfassen kann. Dazu können Sensorelemente in Fahrzeuglängsrichtung und Fahrzeugquerrichtung oder winklig dazu empfindlich sein. Auch Sensoren, die in Fahrzeugvertikalrichtung beschleunigungsempfindlich sind, können verwendet werden. Diese könnten beispielsweise in der B- und/oder C-Säule zur Überrollerkennung eingebaut sein. Der Sensor S ist über einen Datenausgang mit einem Mikrocontroller µC verbunden und einem elektronischen Sicherheitsschalter SCON. Der Mikrocontroller µC empfängt über einen zweiten Dateneingang Signale von einem Schnittstellenbaustein IF. Über einen Datenausgang ist der Mikrocontroller µC mit einem Endstufenbaustein FLIC verbunden.

Die Kommunikation zwischen den Bausteinen im Steuergerät SG und dem Prozessor µC wird vorzugsweise über den sogenannten SPI (Serial Peripherial Interface Bus) durchgeführt. Dieser Bus ist als Master-Slave-Bus organisiert, wobei der Mikrocontroller µC der Master ist und die angeschlossenen Bausteine die Slaves. Die Signale vom Interfacebaustein IF gehen jedoch nicht nur an den Mikrocontroller µC, sondern auch an einen zweiten Dateneingang des Sicherheitsschalters SCON. Der Sicherheitsschalter SCON ist über einen Datenausgang mit dem Endstufenbaustein FLIC verbunden. An den Interfacebaustein IF ist außerhalb des Steuergeräts SG ein peripherer Sensor PAS angeschlossen. Beispielhaft ist hier nur ein einziger Baustein PAS dargestellt, es können jedoch weit mehr Bausteine im Fahrzeug eingebaut sein. Der Beschleunigungssensor PAS kann beispielsweise zur Seitenaufprallsensierung in der B-Säule angeordnet sein und auch als Upfrontsensor am Kühlergrill. Der Einfachheit halber sind weitere Bausteine, die sich auch im Steuergerät SG befinden, aber für die Beschreibung der Erfindung unwesentlich sind, nicht dargestellt. An den Endstufenbaustein FLIC sind dann die Zündkreise für die einzelnen Airbags und Gurtstraffer sowie Überrollbügel angeschlossen.

Die Funktion ist die folgende:

Über die Sensoren S und PAS werden Beschleunigungen, die das Fahrzeug auf Grund eines Unfalls erfährt, gemessen und diese Sensorsignale werden dann als integrierte Beschleunigungssignale von den Sensoren S und PAS ausgegeben. Die Sensorsignale von den Sensoren S und PAS werden jeweils von dem Prozessor µC und dem Sicherheitsbaustein SCON unabhängig voneinander ausgewertet. Auf dem Prozessor µC läuft ein komplexer Auslösealgorithmus, der anhand einer Signalanalyse bestimmt, ob und welche Rückhaltemittel ausgelöst werden sollen. Parallel dazu wertet der Sicherheitsbaustein SCON die Sensorsignale mit einfachen, festen Schwellwerten aus. Es ist möglich, dass auch ein einfacher Algorithmus auf dem Sicherheitsbaustein SCON abläuft. Weiterhin ist es möglich, dass der Sicherheitsbaustein SCON Watchdogfunktionen für den Prozessor µC ausführt. Diese werden jedoch hier nicht dargestellt. Erfindungswesentlich ist nun, dass die Sensoren S und PAS integrierte Beschleunigungssignale bereits ausgeben, so dass der Prozessor µC die Integration selbst nicht durchführen muss und der Sicherheitsbaustein SCON den Schwellwertvergleich anhand dieser integrierten Beschleunigungssignale durchführen kann und damit genauer eine Plausibilisierung einer Auslöseentscheidung durch den Prozessor µC durchführen kann. Erkennt der Sicherheitsbaustein SCON diesen Auslösefall, dann gibt er den Endstufenbaustein FLIC frei, so dass dann bei einem Feuerbefehl des Prozessors µC die Endstufen durchgeschaltet werden können und der Zündstrom in die Zündkreise fließen kann.

Figur 2 erläutert in einem ersten Ausführungsbeispiel den inneren Aufbau der Sensoren S oder PAS. Das Sensorelement 20 gibt Signale an einen Verstärker 21 aus, der diese verstärkt. Bei dem Sensorelement 20 kann es sich beispielsweise um eine Membran oder eine Fingerstruktur handeln. Es sind jedoch auch andere Konzepte zur Erfassung der Beschleunigung möglich. Das verstärkte Sensorsignal wird dann vom Verstärker 21 an einen Analog-Digital-Wandler 22 ausgegeben. Der Analog-Digital-Wandler führt eine Digitalisierung des Sensorsignals durch. Dieses wird dann im Baustein 23 digital integriert. Im Baustein 24 erfolgt dann eine elektronische Hochpaßfilterung. Diese Hochpaßfilterung ist notwendig, um eine mögliche Offsetdrift des Sensors zu kompensieren. Die Offsetdrift des Sensors könnte nämlich bei Fehlen eines solchen Hochpasses zu einem Auslösesignal führen, ohne dass ein Auslösefall vorliegt.

Figur 3 erläutert in einem zweiten Ausführungsbeispiel den inneren Aufbau der erfindungsgemäßen Sensoren S und PAS. Ein Sensorelement 30, das dem Sensorelement 20 entspricht, ist an einen Verstärker 31 angeschlossen, der wiederum dem Verstärker 21 entspricht. Das verstärkte Ausgangssignal des Verstärkers 31 wird durch einen Integrator 32 analog integriert und dann in einem Hochpaßfilter 33 durch einen analogen Hochpaßfilter gefiltert, um die Offsetdrift zu eliminieren. Das so bearbeitete Signal wird dann in einem Analog-Digital-Wandler 34 digitalisiert, so dass es dann von den Sensoren S bzw. PAS direkt ausgegeben werden kann und von dem Prozessor µC und dem Sicherheitsschalter SCON ausgewertet werden kann. Weitere Mischformen zwischen den Beispielen aus den Figuren 2 und 3 sind möglich.

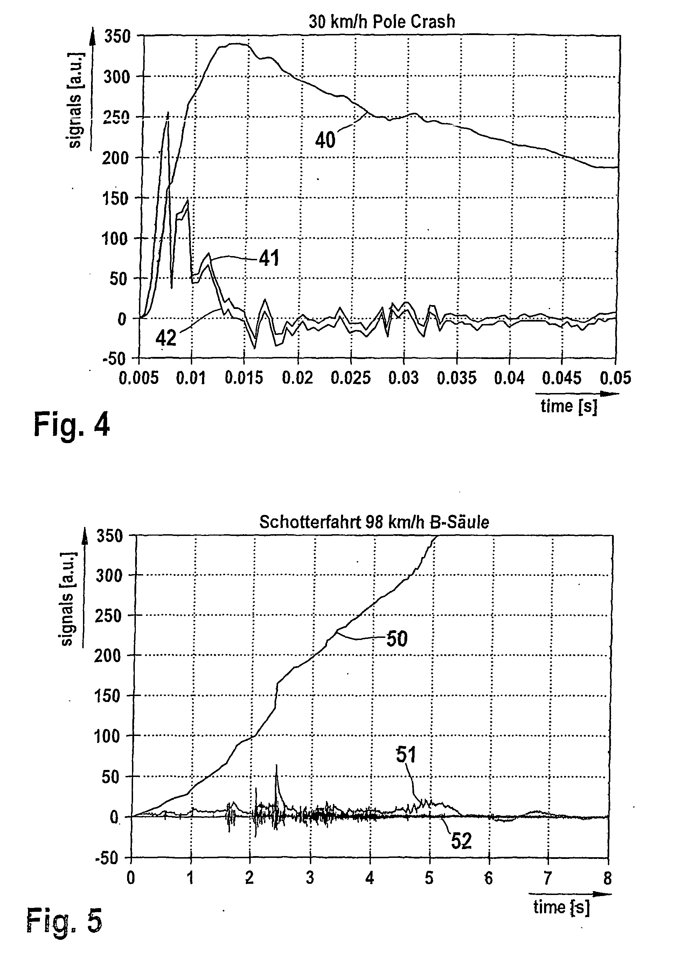

Figur 4 erläutert in einem ersten Signal-Zeit-Diagramm das Sensorsignal der Sensoren S bzw. PAS bei einem Fahrcrash. Auf der Abszisse ist die Zeit dargestellt und auf der Ordinate das Signal in willkürlichen Einheiten. Es handelt sich hier um einen 30-km/h-Pfahlcrash. Die Kurve 40 stellt das integrierte Beschleunigungssignal dar, während die Kurve 41 das abgeleitete integrierte Signal ist und die Kurve 42 das ursprüngliche Beschleunigungssignal, das jedoch durch einen 360Hz 3 Pole Besselfilter gefiltert wurde.

Das ursprüngliche Sensorsignal 42 wird also mit dem 360Hz-Tiefpaß gefiltert und mit 2kHz abgetastet. Die Werte werden anschließend addiert und mit 2Hz hochpaßgefiltert. Das Signal wird dann mit einer Auflösung von ± 480 LSB (10 Bit) übertragen. Der Mikrocontroller µC hat dann intern die Möglichkeit, auf das direkte Beschleunigungssignal durch einfache Differenzbildung, das ist das Signal 41, zurückzugreifen. Das integrierte Sensorsignal 40 würde je nach Schwellwert bei 100 bis 200 LSB ca. 7 bis 9 ms oder 2 bis 5 ms nach Auftreten der Beschleunigung zu einer Auflösung führen. Das ursprüngliche Sensorsignal kann recht gut rekonstruiert werden, zumindest in dem Auslöserelevanten Teil des Signals. Danach führt die Hochpaßfilterung zu einem leichten Offsetversatz. Die Hochpaßfilterung ist notwendig, um leichte Offsetdriften von Sensoren wegzufiltern. Anhand einer Schotterfahrt wurde die Hochpaßfilterung überprüft. Figur 5 zeigt das Ergebnis. Auch hier ist ein Signal-Zeit-Diagramm dargestellt, wobei wiederum auf der Abszisse die Zeit und auf der Ordinate willkürliche Einheiten für das Signal angegeben sind. Die Kurve 50 zeigt das integrierte Beschleunigungssignal ohne eine Hochpaßfilterung, die Kurve 51 das integrierte Signal mit Hochpaßfilterung und die Kurve 52 das Beschleunigungssignal nach der Tiefpaßfilterung. Die Kurve 50 zeigt, dass ohne Hochpaßfilterung auslöserelevante Signale auf Grund der Nichtbeachtung der Offsetdrift des Sensors erzeugt würden, während mit Hochpaßfilterung auch bei dieser Schotterfahrt keine auslöserelevanten Signale erzeugt werden.

## Patentansprüche

1. Steuergerät (SG) zur Ansteuerung von Personenschutzmitteln mit einem elektronischen Sicherheitsschalter (SCON), der unabhängig von einem Prozessor (µC) Endstufen (FLIC) in Abhängigkeit von einem Signal einer Beschleunigungssensorik (S, PAS) freigibt, wobei der Prozessor (µC) in Abhängigkeit von dem Signal die Endstufen (FLIC) ansteuert, **dadurch gekennzeichnet, dass** der Sicherheitsschalter (SCON) ein integriertes Beschleunigungssignal als das Signal auswertet.

2. Steuergerät nach Anspruch 1, **dadurch gekennzeichnet, dass** die Beschleunigungssensorik (S, PAS) einen Integrator zur Integration des Beschleunigungssignals aufweist.

3. Steuergerät nach Anspruch 1 oder 2, **dadurch gekennzeichnet, dass** zur Filterung des integrierten Beschleunigungssignals ein Hochpaßfilter (24, 33) vorgesehen ist.

## Claims

1. Control unit (SG) for actuating personal protection means, comprising an electronic safety switch (SCON) which, independently of a processor (µC), enables output stages (FLIC) as a function of a signal from an acceleration sensor system (S, PAS), with the processor (µC) actuating the output stages (FLIC) as a function of the signal, **characterized in that** the safety switch (SCON) evaluates an integrated acceleration signal as the signal.

2. Control unit according to Claim 1, **characterized in that** the acceleration sensor system (S, PAS) has an integrator for integrating the acceleration signal.

3. Control unit according to Claim 1 or 2, **characterized in that** a high-pass filter (24, 33) is provided for filtering the integrated acceleration signal.

## Revendications

1. Appareil de commande (SG) pour commander des moyens de protection de personnes à l'aide d'un commutateur électronique de sécurité (SCON) qui, indépendamment d'un processeur (µC), libère des étages de puissance (FLIC) en fonction d'un signal de capteur d'accélération (S, PAS),
le processeur (µC) commandant les étages de puissance (FLIC) en fonction du signal,
**caractérisé en ce que**
le commutateur de sécurité (SCON) exploite comme signal, un signal d'accélération, intégré.

2. Appareil de commande selon la revendication 1,
**caractérisé en ce que**
les capteurs d'accélération (S, PAS) comportent un intégrateur pour intégrer le signal d'accélération.

3. Appareil de commande selon la revendication 1 ou 2,
**caractérisé par**
un filtre passe-haut (24, 33) pour filtrer le signal d'accélération intégré.
